(19) Europäisches Patentamt

European Patent Office

Office européen des brevets

(11) EP 1 082 366 B1

(12) FASCICULE DE BREVET EUROPEEN

(45) Date de publication et mention
de la délivrance du brevet:
**18.06.2003 Bulletin 2003/25**

(51) Int Cl.⁷: **C08F 26/06**, C08J 3/24

(21) Numéro de dépôt: **99915863.7**

(22) Date de dépôt: **28.04.1999**

(86) Numéro de dépôt international:
**PCT/FR99/01012**

(87) Numéro de publication internationale:
**WO 99/055747 (04.11.1999 Gazette 1999/44)**

(54) **DISPERSIONS AQUEUSES DE POLYMERES A BASE DE MONOMERES HETEROCYCLIQUES INSATURES ET LEUR MISE EN OEUVRE DANS LES PROCEDES DE RETICULATION**

WAESSRIGE DISPERSIONEN AUF BASIS VON UNGESAETTIGTEN HETEROZYKLISCHEN MONOMEREN UND DEREN VERWENDUNG IN DER VERNETZUNG

AQUEOUS POLYMER DISPERSIONS BASED ON UNSATURATED HETEROCYCLIC MONOMERS AND USE IN CROSSLINKING PROCESSES

(84) Etats contractants désignés:
**AT BE CH CY DE DK ES FI FR GB GR IE IT LI LU MC NL PT SE**

(30) Priorité: **28.04.1998 FR 9805318**

(43) Date de publication de la demande:
**14.03.2001 Bulletin 2001/11**

(73) Titulaire: **RHODIA CHIMIE**
**92408 Courbevoie Cédex (FR)**

(72) Inventeurs:
• **BETT, William**
  **F-75012 Paris (FR)**
• **GRANIER, Vincent**
  **F-94300 Vincennes (FR)**
• **CHARMOT, Dominique**
  **F-93310 Le Pré Saint Gervais (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
| | |
|---|---|
| **DE-A- 3 626 160** | **DE-A- 19 519 338** |
| **DE-C- 942 538** | **US-A- 4 349 651** |
| **US-A- 5 696 212** | |

**Description**

La présente invention a pour objet des dispersions aqueuses de polymères issus de la polymérisation en émulsion d'un mélange de monomères dont au moins l'un des monomères est un hétérocycle insaturé. Elle concerne également la mise en oeuvre de ces dispersions aqueuses de polymères dans les procédés de réticulation.

Les compositions de revêtement qui réticulent à température supérieure ou égale à la température ambiante sont connues de l'art antérieur. Certaines de ces compositions résultent des réactions entre les latex comportant séparément des fonctions esters carboxyliques et des fonctions hydroxyles, ou entre les latex comportant à la fois des fonctions hydroxyles et esters carboxyliques, notamment sous forme de β-hydroxyester.

Les réactions entre les fonction hydroxyle et ester carboxylique peuvent être amorcées et catalysées à température ambiante par des systèmes catalytiques créés in situ, après réaction d'un nucléophile comme par exemple un imidazole avec un époxyde.

Ces compositions présentent cependant un certain nombre d'inconvénients.

Le problème principal est la stabilité au stockage appelée également le temps de vie en pot ou "pot-life" des mélanges contenant les latex précités et le système catalytique.

En effet, les mélanges de latex et de système catalytique de l'art antérieur présentent un temps de vie en pot beaucoup trop court pour les rendre manipulables et économiquement intéressants : le temps de vie en pot (pot-life) est souvent inférieur ou égal à 4 heures.

En outre, la mise en oeuvre des systèmes catalytiques de l'art antérieur peut poser des problèmes de formulation : la dispersion du composé nucléophile dans le milieu réactionnel, et plus particulièrement en milieu aqueux, n'est pas toujours facile.

Par ailleurs, bien que des procédés de réticulations à température ambiante soient déjà décrits, la réticulation n'est généralement efficace qu'à des températures supérieures à l'ambiante.

Il a été observé, et ce de façon tout à fait inattendue et surprenante, qu'en modifiant certains paramètres du système catalytique notamment le nucléophile de départ, il est possible de pallier les inconvénients mentionnés ci-dessus.

Ainsi, la présente invention a pour but de proposer un polymère à base d'un hétérocycle nucléophile insaturé qui, en mélange avec un latex, présente une stabilité améliorée au stockage (pot-life) et une bonne réactivité au moment de son utilisation.

Un autre but de l'invention est de proposer un polymère à base d'un hétérocycle nucléophile insaturé qui ne pose pas de problème de dispersion dans un milieu réactionnel donné.

Enfin, un autre but de l'invention est de proposer un polymère à base d'un hétérocycle nucléophile insaturé qui amorce et catalyse efficacement des procédés de réticulation à température ambiante.

A cet effet, l'invention a pour objet une dispersion aqueuse de polymère (I) insoluble dans l'eau issu de la polymérisation en émulsion d'un mélange de monomères comprenant :

- au moins un monomère (A) hétérocyclique insaturé,
- et éventuellement au moins un monomère (B) éthyléniquement insaturé.

L'invention a également pour objet un procédé de réticulation d'un latex (II) à fonction époxyde mettant en oeuvre la dispersion de polymère (I).

L'invention concerne donc tout d'abord une dispersion aqueuse de polymère (I) insoluble dans l'eau issu de la polymérisation en émulsion dans l'eau d'un mélange de monomères comprenant :

- au moins un monomère (A) hétérocyclique insaturé :

    . comportant au moins un hétéroatome nucléophile,
    . présentant au moins une insaturation éthylénique exocyclique,
    . et dont l'hétérocycle comprend au moins une insaturation éthylénique,

- et éventuellement au moins un monomère (B) éthyléniquement insaturé et présentant une fonction choisie parmi les amides (méth)acryliques, les acides ou les sels d'acides carboxyliques, les esters carboxyliques, les acides ou les sels d'acides organosulfuriques, les acides ou les sels d'acides sulfoniques, les acides ou les sels d'acides phosphoniques, les esters vinyliques et les monomères aromatiques présentant au moins une insaturation éthylénique exocyclique.

Dans le cadre de la présente invention, par polymérisation, on entend aussi bien une homopolymérisation (polymérisation de monomères identiques) qu'une copolymérisation (polymérisation de monomères différents).

Selon une caractéristique essentielle de l'invention, le polymère (I) se présente sous forme d'une dispersion aqueuse. De telles dispersions aqueuses de polymère sont communément appelées latex.

Le polymère (I) est issu de la polymérisation en émulsion d'au moins un **monomère (A).** Ce monomère (A) comporte au moins un hétéroatome nucléophile. Par hétéroatome nucléophile, on entend un hétéroatome trivalent appartenant au groupe VB de la Classification Périodique des Eléments. Pour l'ensemble de l'exposé, la Classification Périodique est celle du "Supplément au Bulletin de la Société Chimique de France, No. 1, janvier 1966." Ces hétéroatomes peuvent être l'azote, le phosphore, l'arsenic, l'antimoine ou le bismuth. De préférence, l'hétéroatome nucléophile est l'azote. De préférence, les monomères (A) hétérocycliques insaturés, comportent eu moins hétéroatomes nucléophiles, en particulier deux atomes d'azote.

Le monomère A doit également présenter une insaturation éthylénique dans son hétérocycle et une insaturation éthylénique exocyclique. L'un au moins des hétéroatomes nucléophiles et/ou l'un au moins des atomes de carbone de l'hétérocycle peut être substitué par une chaîne carbonée comprenant au moins deux atomes de carbone et au moins une insaturation éthylénique, la chaîne carbonée pouvant être éventuellement fonctionnalisée. Comme substituant, on peut citer à titre indicatif, des chaînes carbonées notamment le vinyle, l'allyle, le propényle, le butényle, le butadiényle et des chaînes carbonées fonctionnalisées notamment l'acrylate et le méthacrylate. Dans le monomère (A), l'un au moins des atomes de carbone de l'hétérocycle insaturé peut, en outre, être substitué par au moins un groupe alkyle linéaire ou ramifié comportant 1 à 8 atomes de carbone. A ce titre, le groupe alkyle linéaire ou ramifié peut être le méthyle, l'éthyle, le propyle, l'isopropyle et le n-butyle.

Les monomères (A) peuvent appartenir à la famille des imidazoles, des imidazolines, des amidines ou des guanidines. Ils appartiennent de préférence à la famille des imidazoles. Il s'agit plus particulièrement du N-vinylimidazole.

Dans la présente invention, le polymère (I) peut être un homopolymère issu de l'homopolymérisation d'un mélange composé exclusivement de monomères (A), les monomères (A) étant identiques. Le polymère (I) peut également être un copolymère issu de la copolymérisation d'un mélange de monomères (A) et (B).

Le **monomère (B)** est éthyléniquement insaturé et présente une fonction choisie parmi les acides ou les sels d'acides carboxyliques, les esters carboxyliques, les acides ou les sels d'acides organosulfuriques, les acides ou les sels d'acides sulfoniques, les acides ou les sels d'acides phosphoniques, les esters vinyliques, les amides (méth) acryliques ou les monomères (B) aromatiques présentant au moins une insaturation éthylénique exocyclique.

Plus particulièrement, le monomère (B) éthyléniquement insaturé peut être choisi parmi:

- les acides ou les sels d'acides carboxyliques du type (méth)acrylique tels que l'acide acrylique, l'acide méthacrylique, l'acrylate de sodium ; les diacides carboxyliques tels que l'acide itaconique, l'acide maléique, l'acide fumarique ; leurs demi esters tels que les demi esters méthylique, éthylique, propylique, n-butylique, iso-butylique ; ou leurs sels tels que leurs sels de sodium, de potassium ou d'ammonium,

- les esters carboxyliques du type acrylique dont le groupe alkyle comporte de 1 à 20 atomes de carbone tels que l'acrylate de méthyle, le méthacrylate de méthyle, l'acrylate d'éthyle, le méthacrylate d'éthyle, l'acrylate de propyle, le méthacrylate de propyle, l'acrylate d'isopropyle, l'acrylate de n-butyle, le méthacrylate de n-butyle, l'acrylate d'iso-butyle, le méthacrylate d'iso-butyle, l'acrylate de éthyl-2 hexyle, le méthacrylate de éthyl-2 hexyle, l'acrylate de décyle, le méthacrylate de décyle, l'acrylate de lauryle, le méthacrylate de lauryle, l'acrylate de stéaryle, le méthacrylate de stéaryle,

- les acides ou les sels alcalins ou alcalino-terreux d'acides organosulfuriques, tels que l'acide vinylsulfurique, l'acide vinylphénylsulfurique,

- les acides ou les sels alcalins ou alcalino-terreux d'acides sulfoniques, par exemple les acide vinylsulfoniques tels que l'acide vinylsulfonique, l'acide styrène sulfonique, l'acide 2-acrylamido-2-méthylpropane sulfonique, méthallylsulfonate de sodium,

- les acides ou les sels alcalins ou alcalino-terreux d'acides phosphoniques, par exemple l'acide vinylphosphonique,

- les esters vinyliques dont la partie comportant la fonction ester contient 1 à 7 atomes de carbone, tels que l'acétate de vinyle, le Versatate® de vinyle, le propionate de vinyle,

- les amides (méth)acryliques, et leurs dérivés dont le groupe alkyle comporte de 1 à 10 atomes de carbone, tels que l'acrylamide et le méthacrylamide, et

- les monomères aromatiques présentant au moins une insaturation éthylénique exocyclique et comportant 8 à 18 atomes de carbone tels que le styrène, le vinyle toluène, l'α-méthyle styrène.

De préférence, le monomère (B) éthyléniquement insaturé est choisi parmi les esters carboxyliques du type (méth)acrylique, dont le groupe alkyle comporte de 1 à 20 atomes de carbone tels que l'acrylate de méthyle, le méthacrylate de méthyle, l'acrylate d'éthyle, le méthacrylate d'éthyle, l'acrylate de propyle, le méthacrylate de propyle, l'acrylate d'isopropyle, l'acrylate de n-butyle, le méthacrylate de n-butyle, l'acrylate d'iso-butyle, le méthacrylate d'iso-butyle, l'acrylate de éthyl-2 hexyle, le méthacrylate de éthyl-2 hexyle, l'acrylate de décyle, le méthacrylate de décyle, l'acrylate de lauryle, le méthacrylate de lauryle, l'acrylate de stéaryle, le méthacrylate de stéaryle.

Selon un mode préféré, le mélange de monomère(s) (B) comprend peu ou pas d'amides (méth)acryliques et/ou d'acides carboxyliques, car ces monomères présentent la propriété de rendre le polymère (I) soluble dans l'eau. Donc, de préférence, la quantité d'amides (méth)acryliques ou d'acides carboxyliques utilisée doit être assez faible pour éviter de rendre le polymère (I) soluble.

Selon le mode préféré, la dispersion aqueuse de polymère (I) est issue de la copolymérisation d'un mélange de monomères comprenant :

- à titre de monomère (A) le N-vinylimidazole, et
- à titre de monomère (B) le méthacrylate de méthyle et/ou l'acrylate de n-butyle.

La teneur en monomère(s) (A) est généralement comprise entre 1 % et 100 % en poids, de préférence entre 1 % et 20 % en poids, et plus particulièrement entre 1 % et 6 % en poids par rapport au poids total du polymère (I).

Si des monomères (B) sont utilisés pour la synthèse du polymère (I), la teneur en monomère(s) (B) est généralement comprise entre 1 % et 99 % en poids, de préférence entre 80 % et 99 % en poids, et plus particulièrement entre 94 % et 99 % en poids par rapport au poids total du polymère (I).

Le polymère (I) peut être rendu plus réactif par ajout d'un troisième type de monomère au mélange de polymérisation. En effet, le polymère (I) peut être issu de la copolymérisation d'un mélange de monomères (A), (B) et d'au moins **un hydroxy ester carboxylique (C)** choisi parmi les esters acryliques et méthacryliques dont le groupe hydroxyalkyl comporte de 2 à 10 atomes de carbone. Les esters carboxyliques (C) peuvent être choisis parmi le 2-hydroxyéthyle acrylate, le 2-hydroxyéthyle méthacrylate, le 3-hydroxypropyle acrylate, le 3-hydroxypropyle méthacrylate, le 4-hydroxybutyle acrylate, le 4-hydroxybutyle méthacrylate. La teneur en monomère(s) (C) est généralement comprise entre 1 % et 40 % en poids, et de préférence entre 1 % et 30 % en poids par rapport au poids total du polymère (I).

La dispersion aqueuse de polymère (I) selon l'invention est obtenue par simple mélange de monomères (A), éventuellement (B) et/ou (C), puis polymérisation en émulsion dans l'eau. Il est important que l'émulsion soit réalisée dans l'eau car l'utilisation de solvants conduit généralement à la précipitation du polymère (I) ; le polymère (I) ne se présente donc pas sous forme de latex. Les monomères mis en oeuvre peuvent être introduits en mélange ou séparément et simultanément dans le milieu réactionnel, soit avant le début de la polymérisation en une seule fois, soit au cours de la polymérisation par fractions successives ou en continu. Il est généralement préférable que la polymérisation en émulsion soit réalisée à un pH d'au moins 7, voire d'au moins 8. Par conséquent, le pH de la dispersion aqueuse de polymère (I) selon l'invention présente, de préférence, un pH d'au moins 7, voire d'au moins 8. La polymérisation est habituellement mise en oeuvre en présence d'un émulsifiant et d'un initiateur de polymérisation. En tant qu'agent émulsifiant, on met en oeuvre généralement les agents anioniques classiques représentés notamment par les sels d'acides gras, les alkylsulfates, les alkylsulfonates, les alkylarylsulfates, les alkylarylsulfonates, les arylsulfates, les arylsulfonates, les sulfosuccinates, les alkylphosphates de métaux alcalins, les sels de l'acide abiétique hydrogénés ou non. Ils sont généralement employés à raison de 0,01 à 5 % en poids par rapport au poids total des monomères. L'initiateur de polymérisation en émulsion est représenté plus particulièrement par les hydroperoxydes tels que l'eau oxygénée, l'hydroperoxyde de cumène, l'hydroperoxyde de diisopropylbenzène, l'hydroperoxyde de paramenthane, l'hydroperoxyde de tert-butyl, et par les persulfates tels que le persulfate de sodium, le persulfate de potassium, le persulfate d'ammonium. Il est employé en quantité comprise entre 0,05 et 2 % en poids par rapport au total des monomères. Ces initiateurs sont éventuellement associés à un réducteur, tel que le bisulfite ou le formaldéhydesulfoxylate de sodium, les polyéthylèneamines, les sucres (dextrose, saccharose), les sels métalliques. La quantité de réducteur utilisé varie de 0 à 3 % en poids par rapport au poids total des monomères. La température de réaction, fonction de l'initiateur mis en oeuvre, est généralement comprise entre 0 et 100°C, et de préférence, entre 30 et 90°C. On peut utiliser un agent de transfert dans des proportions allant de 0 à 3 % en poids par rapport au(x) monomère(s), généralement choisi parmi les mercaptans tels que le N-dodécylmercaptan ou le tertiododécylmercaptan, le cyclohexène, les hydrocarbures halogénés tels que le chloroforme, le bromoforme, le tétrachlorure de carbone. Il permet de régler la longueur des chaînes moléculaires. Il est ajouté au milieu réactionnel soit avant la polymérisation, soit en cours de polymérisation.

Un autre objet de la présente invention est la mise en oeuvre des dispersions aqueuses de polymère (I) décrites ci-dessus dans des procédés de réticulation.

Ainsi, l'invention concerne un procédé de réticulation d'un latex (II) préparé à partir d'un mélange :

- d'au moins un monomère à insaturation éthylénique (D), et
- soit d'au moins un monomère éthyléniquement insaturé à fonction époxyde (E), soit d'au moins un polymère à fonction époxyde (EP), soit un mélange de monomères (E) et de polymères (EP), dans lequel on fait réagir ledit latex (II) avec une dispersion aqueuse de polymère (I) telle quedéfinie précédemment.

Les **monomères à insaturation éthylénique (D)** peuvent être choisis parmi :

- les monomères aromatiques présentant au moins une insaturation éthylénique exocyclique, tels que le styrène, l'α-méthylestyrène, les alkyles styrènes tels que le méthyle styrène, les halogénostyrènes tels que le chlorostyrène, le vinyle toluène, le vinyle naphtalène, le divinyle benzène, le diallyle phtalate, ou
- les monomères à fonction ester carboxylique, tels que les esters acryliques et méthacryliques dont le groupe alkyle est en $C_1$ à $C_{18}$, les β-cétoesters carboxyliques polymérisables éventuellement substitués, les esters vinyliques tels que l'acétate de vinyle, le Versatate® de vinyle, le propionate de vinyle. Parmi les esters acryliques et méthacryliques dont le groupe alkyle est en $C_1$ à $C_{18}$, on peut citer notamment l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate d'iso-butyle, le méthacrylate d'iso-butyle, l'acrylate de 2-ethylhexyle, le méthacrylate de 2-éthylhexyle, l'acrylate de cyclohexyle, le méthacrylate de cyclohexyle, l'acrylate de décyle, le méthacrylate de décyle, l'acrylate d'isodécyle, le méthacrylate d'isodécyle, l'acrylate de stéaryle, le méthacrylate de stéaryle. De préférence, il s'agit du styrène et des alkyle styrène. Parmi les β-cétoesters carboxyliques, on peut citer l'acétoacétate de vinyle, l'acétoacétate d'allyle, l'acétoacétoxyéthyle méthacrylate, l'acétoacétoxyéthyle acrylate.

Dans ce type de procédé de réticulation, la présence d'une fonction époxyde dans le milieu est essentielle. Les **monomères (E)** peuvent être choisis parmi l'acrylate de glycidyle, le méthacrylate de glycidyle et l'oxyde d'allyle et de glycidyle. Les **polymères à fonction époxyde (EP)** peuvent être choisis parmi le bisphénol A diglycidyle éther, diglycidyle adipate, 1,4-diglycidyle butyle éther et leurs dérivés. Dans le cadre de la présente invention, on peut également envisager un latex (II) constitué exclusivement par au moins un polymère à fonction époxyde (EP).

Il est préférable que le polymère (I) soit issu de la polymérisation d'un mélange de monomère(s) (B) comprenant peu ou pas d'acides carboxyliques car ceux-ci peuvent limiter la réaction de réticulation avec le latex (II). Ainsi, selon un mode préféré, le procédé de réticulation a lieu en présence d'une dispersion aqueuse de polymère (I) issu de la copolymérisation d'un mélange de monomères comprenant :

- à titre de monomère (A) le N-vinylimidazole, et
- à titre de monomère (B) le méthacrylate de méthyle et/ou l'acrylate de n-butyle.

Un premier mode de réalisation consiste à procéder à une réticulation d'un latex (II) préparé à partir d'un mélange d'au moins un monomère à insaturation éthylénique (D) et d'au moins un monomère éthyléniquement insaturé à fonction époxyde (E)

Un deuxième mode de réalisation consiste à procéder à une réticulation d'un latex (II) préparé à partir d'un mélange d'au moins un monomère à insaturation éthylénique (D) et d'au moins un polymère à fonction époxyde (EP).

Un troisième mode de réalisation consiste à procéder à une réticulation d'un latex (II) préparé à partir d'un mélange d'au moins un monomère à insaturation éthylénique (D), d'au moins un monomère éthyléniquement insaturé à fonction époxyde (E) en mélange avec au moins un polymère à fonction époxyde (EP).

Un quatrième mode de réalisation consiste à procéder à une réticulation d'un latex (II) préparé à partir d'au moins un monomère éthyléniquement insaturé à fonction époxyde (E) et d'un mélange de monomères à insaturation éthylénique (D) comprenant au moins un monomère aromatique à insaturation éthylénique exocyclique et au moins un ester (méth)acrylique.

Un cinquième mode de réalisation consiste à procéder à une réticulation d'un latex (II) préparé à partir d'au moins un monomère éthyléniquement insaturé à fonction époxyde (E) et d'un mélange de monomères à insaturation éthylénique (D) comprenant au moins monomère aromatique à insaturation éthylénique exocyclique et au moins un β-cétoester carboxylique.

Le procédé de réticulation selon l'invention peut conduire à des réseaux réticulés denses. Lorsque de tels réseaux sont souhaités, le latex (II) est généralement préparé à partir d'un mélange comprenant, en outre, au moins un **monomère éthyléniquement insaturé à fonction hydroxyle (F)**. Les monomères (F) peuvent être choisis parmi le 2-hydroxyéthyle acrylate, le 2-hydroxyéthyle méthacrylate, le 2-hydroxypropyle acrylate, le 2-hydroxypropyle méthacrylate, le 3-hydroxypropyle acrylate, le 3-hydroxypropyle méthacrylate, le 4-hydroxybutyle acrylate, le 4-hydroxybutyle méthacrylate. De préférence, il s'agit du 2-hydroxyéthyle acrylate ou du 2-hydroxyéthyle méthacrylate.

Un sixième mode de réalisation consiste à procéder à une réticulation d'un latex (II) préparé à partir d'un mélange de monomères à insaturation éthylénique (D) comprenant au moins un monomère aromatique à insaturation éthylénique exocyclique et au moins un ester (méth)acrylique, d'au moins un monomère éthyléniquement insaturé à fonction époxyde (E) et d'au moins un monomère éthyléniquement insaturé à fonction hydroxyle (F)

Un septième mode de réalisation consiste à procéder à une réticulation d'un latex (II) préparé à partir d'un mélange de monomères à insaturation éthylénique (D) comprenant au moins un monomère aromatique à insaturation éthylénique exocyclique et au moins un ester (méth)acrylique, d'au moins un monomère éthyléniquement insaturé à fonction époxyde (E) en mélange avec au moins un polymère à fonction époxyde (EP) et au moins un monomère éthyléniquement insaturé à fonction hydroxyle (F).

Un huitième mode de réalisation consiste à procéder à une réticulation d'un latex (II) constitué exclusivement de polymères à fonction époxyde (EP), par exemple le bisphénol A diglycidyle éther, diglycidyle adipate, et 1,4-diglycidyle butyle éther. Dans ce cas, le procédé de réticulation est réalisé généralement avec un dispersion de polymère (I) issu de l'homopolymérisation d'un mélange constitué exclusivement de monomères (A).

Le procédé de réticulation selon l'invention peut avoir lieu en présence d'un composé (G) susceptible de pouvoir réagir selon la réaction de Michael. Le composé (G) peut être choisi parmi les résines comportant au moins deux double liaisons conjuguées avec au moins une fonction carbonyle (C=O), notamment le 1, 1, 1-tris-(hydroxyméthyle)-propane-tri-acrylate

Le latex (II) et le polymère (I) sont généralement mélangés dans des proporitons telles que le rapport fonction époxyde/fonction nucléophile soit équimolaire.

Le procédé de réticulation peut se faire en présence d'adjuvants usuels tels que des épaississants, des agents mouillants, des antimousses, des glycols, des agents de coalescence, des pigments, des dispersants et des activateurs de base. En fonction de l'application envisagée, la quantité d'adjuvant(s) mise en oeuvre peut varier. L'homme du métier sait choisir les quantités appropriées en fonction de l'application envisagée.

Les dispersions aqueuses de polymères (I) et latex (II) peuvent réticuler à température ambiante ou à température plus élevée pour former des films et revêtements thermodurcis, notamment lorsque l'on cherche à réaliser des revêtements, tels que des vernis et des peintures.

De préférence, les dispersions aqueuses de polymères (I) et le latex (II) réticulent à température ambiante pour former des films et des revêtements. Par température ambiante, on entend une température comprise entre 15 °C et 30 °C. Les dispersions aqueuses de polymères (I) et latex (II) peuvent aussi réticuler à des températures plus basses pour former des films et des revêtements, par exemple aux environs de 5°C, si on y incorpore des agents de coalescence.

Ces revêtements peuvent s'appliquer sur tout type de substrat : bois, métal, béton, plâtre, terre cuite, pierres, briques, tuiles, matière plastique, verre, papier, cuir et matériaux similaires.

Enfin, l'invention a pour objet le produit contenant une dispersion aqueuse de polymère (I), et un latex (II) préparé à partir d'un mélange d'au moins un monomère à insaturation éthylénique (D), d'au moins un monomère éthyléniquement insaturé à fonction époxyde (E), et éventuellement d'au moins un polymère à fonction époxyde (EP), en tant que produit de combinaison pour une utilisation conjointe pour la préparation d'un revêtement.

Une utilisation conjointe signifie une utilisation de la dispersion aqueuse de polymère (I) et du latex (II) ensemble pour obtenir un revêtement ; la dispersion de polymère (I) et du latex (II) pouvant être introduits simultanément ou séparément.

Les exemples qui suivent donnent une description plus détaillée de l'invention.

### EXEMPLES

### Exemple 1 - Synthèse d'une dispersion aqueuse d'un copolymère (I) à fonction imidazole

La polymérisation est réalisée dans un réacteur à double enveloppe de 5 litres muni d'un agitateur mécanique, d'un condenseur et d'un système permettant d'avoir une atmosphère inerte ($N_2$) au-dessus du milieu réactionnel.

A température ambiante, on introduit :

- 1580 g d'eau épurée,
- 5,165 g de méthyl allyl sulfonate,
- 36 g de laurylsulfate de sodium.

La température est portée à 80°C $\pm$ 1°C.

On ajoute alors 4,22 g de péroxodisulfate d'ammonium et 4,33 g d'hydrogénocarbonate de sodium.

On introduit pendant 4h30 un mélange de monomères de composition suivante :

- 536 g de méthacrylate de méthyle (B),
- 546 g acrylate de butyle (B),
- 60 g de 2-hydroxyéthyl méthacrylate (B),
- 60 g de N-vinylimidazole (A),

En même temps, on introduit pendant 5 heures un mélange de :

- 4,2 g de péroxodisulfate d'ammonium,
- 2,4 g d'hydrogénocarbonate de sodium,
- 200 g d'eau épurée.

Le pH de polymérisation est d'environ 8,5.

Une fois les introductions terminées, une cuisson d'une heure à 80°C est réalisée.

Afin de consommer le maximum de monomères résiduels, un couple redox est ajouté dans le milieu à 70°C : on introduit 3,12 g de péroxybenzoate de tert-butyle, puis on alimente le réacteur pendant 15 minutes avec une solution réductrice de 1,9 g d'acide isoascorbique en solution dans 10 ml d'eau.

La température est maintenue à 70°C pendant 45 minutes afin que ce couple redox ait une efficacité maximale.

La dispersion de copolymère obtenu est ensuite refroidie à température ambiante.

Cette opération permet d'obtenir un copolymère à fonction imidazole, présentant un extrait sec de 41 %.

La viscosité de cette dispersion est de 25 mPa.s. La viscosité est mesurée à 50 tours/minute avec un viscosimètre BROOKFIELD.

Ce latex présente un pH de 8,1.

## Exemple 2 - Synthèse d'un copolymère (I) à fonction imidazole

Dans un réacteur de 1 litre, muni d'un agitateur mécanique, d'un réfrigérant, d'un thermomètre et d'une arrivée d'azote, on introduit successivement :

- 930 ml d'eau ultrafiltrée et désionisée,
- 20,02 g (0,28 mole) d'acrylamide (B)
- 1 g (0,01 mole) de N-vinylimidazole (A).

La solution est ensuite acidifiée avec une solution $10^{-1}$ N de HCl jusqu'à pH d'environ 5,5, puis désoxygénée par barbotage d'azote pendant 30 minutes.

On introduit alors 330 mg de 2,2'-azobis(2-méthylpropioamidine) dihydrochlorure ($1,2.10^{-3}$mole), dissous dans un peu d'eau, puis le mélange réactionnel est chauffé à 55-58°C pendant environ 3 heures.

Après refroidissement, la solution est précipitée dans l'acétone. Le copolymère obtenu sous forme de filaments blancs est séché sous vide de pompe à palettes, broyé au broyeur à billes, et séché à nouveau.

On obtient 21 g de copolymère (I), soit un rendement de 88 %.

## Exemple 3 - Synthèse d'un latex (II) à fonction hydroxyéthyl et époxyde

A température ambiante, on introduit dans un réacteur à double enveloppe de 5 litres muni d'un agitateur mécanique, d'un condensateur et d'un système permettant d'avoir une atmosphère inerte ($N_2$) au dessus du milieu réactionnel :

- 2130 g d'eau épurée,
- 8,909 g de tensioactif Aérosol MA80 (dihexyl sulfosuccinate de Na),
- 8,4 g d'acrylate de butyle (D),
- 19,5 de méthacrylate de méthyle (D), et
- 4,272 g d'hydrogénocarbonate de sodium.

La température est portée à 82 °C en approximativement 1 heure.

On ajoute 9,36 g de peroxodisulfate d'ammonium à une température de 82 ± 1°C, afin d'amorcer la réaction de polymérisation.

Après 15 minutes d'attente (polymérisation en pied de cuve et maîtrise de l'exothermie), on commence l'introduction des monomères. On introduit un mélange de composition suivante :

- 147 g de styrène (D),
- 281,6 g de 2-hydroxyéthyl méthacrylate (F),
- 40,16 g de méthacrylate de glycidyle (E),
- 9,28 g de tensioactif Aérosol OT 75 (dioctyl sulfosuccinate de Na)
- 75,8 g de résine époxyde Shell EPIKOTE 828 (masse moléculaire moyenne = 700) polymère EP),
- 562,1 g de acrylate de butyle (D)
- 464,6 g de méthacrylate de méthyle (D)

L'ajout de ce mélange est effectué pendant 3 heures. En fin d'introduction, la température est maintenue à 82°C pendant 1 heure, afin de consommer le maximum de monomères résiduels.

Le produit est enfin refroidi à température ambiante.

Cette opération permet d'obtenir un latex à fonction hydroxyéthyle et époxyde, présentant un extrait sec de 44 %.

La viscosité de ce latex est de 47 mPa.s. La viscosité est mesurée par à 50 tours/minute avec un viscosimètre BROOKFIELD.

Ce latex présente un pH = 6,9.

## Exemple 4 - Synthèse d'un latex (II) à fonction époxyde

La polymérisation en émulsion est réalisée dans un réacteur à double enveloppe de 1,5 litres muni d'un agitateur mécanique, d'un condenseur et d'un système permettant d'avoir une atmosphère inerte ($N_2$) au-dessus du milieu réactionnel.

A température ambiante, les éléments suivants sont introduits dans le réacteur :

- 380 g d'eau épurée,
- 8,92 g de Rhodafac RS610® (alcool tridécylique éthoxylé phosphaté),
- 5,5 ml d'une solution aqueuse à 10 % de NaOH (faisant passer le pH d'environ 2,0 à 3,9),

Le mélange est chauffé à 80°C (±1°C).

Lorsque la température atteint 80 ± 1°C, on ajoute en une seule fois :

- 0,144 g de peroxodisulfate d'ammonium,
- 5 g d'eau épurée.

Deux solutions sont ensuite introduites en continu et en parallèle à 80 ± 1°C.

La solution 1 est ajoutée en 5 heures. Elle comprend :

- 136,5 g de styrène (D),
- 130,7 g d'acrylate de butyle (D),
- 93 g de méthacrylate de glycidyle (E).

La solution 2 est ajoutée en 6 heures. Elle comprend :

- 1,47 g de peroxodisulfate d'ammonium,
- 1,728 g de hydrogénocarbonate de sodium,
- 50 g d'eau épurée.

En fin d'introduction, la température est maintenue à 80°C ± 1°C pendant 1 heure.

Juste avant refroidissement, afin de consommer un maximum de monomères résiduels on ajoute un couple redox constitué de :

- 0,67 g de tertiobutyl hydroperoxyde,
- 0,47 g /10 ml $H_2O$ de métabisulfite de sodium.

Ce mode opératoire permet d'obtenir un latex à 46 % d'extrait sec.

## Exemple 5 - Latex (II) - Synthèse d'un latex (II) à fonction β-cétoester et époxyde

La polymérisation est réalisée dans un réacteur à double enveloppe de 1,5 litres muni d'un agitateur mécanique, d'un condenseur et d'un système permettant d'avoir une atmosphère inerte ($N_2$) au-dessus du milieu réactionnel.

A température ambiante, les éléments suivants sont introduits dans le réacteur :

- 2120 g d'eau épurée,
- 8,92 g de dihexyle sulfosuccinate de sodium (Aérosol MA 80®),
- 8,4 g d'acrylate de butyle (D),
- 19,5 g de méthacrylate de méthyle (D),

- 4,27 g d'hydrogénocarbonate de sodium.

Le mélange est chauffé à 82 (± 1°C).

Lorsque la température atteint 82 ± 1°C, on ajoute en une seule fois :

- 9,36 g de persulfate d'ammonium,
- 50 g d'eau épurée.

On laisse le milieu réagir pendant 15 minutes.

Le mélange suivant est ensuite introduit en 3 heures à 82 ± 1°C :

- 128 g de styrène (D),
- 19,7 g de méthacrylate de glycidyle (E),
- 156,8 g d'acétoacétoxy éthyle méthacrylate (β-cétoester carboxylique),
- 12,8 g de dioctyle sulfosuccinate de sodium (Aérosol OT-75®)
- 525,3 g d'acrylate de butyle (D),
- 446,4 g de méthacrylate de méthyle (D).

Les produits Aérosol OT-75® et Aérosol MA 80® sont distribués par CYTEC.

Le milieu réactionnel est ensuite maintenu à 82 ± 1°C pendant 1 heure avant refroidissement.

Ce mode opératoire permet d'obtenir un latex à fonction β-cétoester et époxyde à 42 % d'extrait sec.

### Exemple 6 - Test de gonflement et de prise en masse

On réalise deux systèmes réticulables.

L'échantillon 1, selon l'art antérieur, est un mélange du latex de l'exemple 3 et de 1,4-diazabicyclo[2.2.2] octane (ci-après DABCO) qui est un composé nucléophile.

L'échantillon 2, selon l'invention, est un mélange de la dispersion de copolymère (I) greffé par un N-vinylimidazole, préparé selon l'exemple 1, et du latex (II) préparé selon l'exemple 3.

Pour les deux échantillons, les mélanges sont réalisés dans un rapport équimolaire fonction époxyde/fonction nucléophile.

Ces échantillons sont utilisés pour recouvrir un carreau de faïence.

On mesure à partir du film obtenu le taux de gonflement selon le protocole suivant. Un morceau du film obtenu est pesé (masse M1) puis plongé dans le méthyléthylcétone (MEC) pendant 24 heures. Après 24 heures d'immersion, le morceau de film est sorti du solvant, immédiatement pesé (masse M2) puis séché dans une étuve. Après 1 heure de séchage à 105°C, le film est pesé (masse M3). Le taux de gonflement est donné par la formule :

$$\frac{(M2-M3) \times 100}{M3}$$

Les résultats sont donnés dans le Tableau I.

Tableau I

| Echantillon | Taux de gonflement (%) après séchage 14 jours à 23°C sous 55% d'humidité relative | Temps de prise en masse du mélange |
|---|---|---|
| 1 comparatif | 640 | 4 heures |
| 2 invention | 610 | 7 jours |

On constate que l'échantillon 2 selon l'invention présente un temps de vie en pot (pot life) plus long que l'échantillon 1 de l'art antérieur puisque le temps de prise en masse de l'échantillon 2 est nettement supérieur à celui de l'échantillon 1 de l'art antérieur.

Le taux de gonflement traduit lui la réactivité du copolymère (I) avec le latex (II). L'échantillon 2 est plus réactif que l'échantillon 1 puisqu'il conduit à un film résistant qui gonfle moins en présence de solvant. Il est à noter qu'en l'absence de copolymère (I), le latex (II) se dissout dans la méthyléthylcétone (MEC) ce qui prouve que le latex (II) ne peut pas réticuler sans l'ajout du copolymère (I).

## Exemple 7 - Test de gonflement

Afin de vérifier l'efficacité des différents systèmes de réticulation décrits dans l'invention, trois systèmes réticulables différents mettant en jeu différents types de copolymère (I) et de latex (II), sont réalisés et comparés :

L'échantillon 3 est un mélange du copolymère (I) greffé par un imidazole préparé selon l'exemple 2 (ne se présentant pas sous forme de dispersion aqueuse) et du latex préparé selon l'exemple 3.
L'échantillon 4 est un mélange de la dispersion aqueuse du copolymère (I) greffé par un imidazole préparé selon l'exemple 1 et du latex préparé selon l'exemple 4.
L'échantillon 5 est un mélange de la dispersion aqueuse du copolymère (I) greffé par un imidazole préparé selon l'exemple 1 et du latex (II) préparé selon l'exemple 5 ; la réticulation a lieu en présence de 1, 1, 1-tris-(hydroxyméthyle)-propane-tri-acrylate.

Tous les échantillons sont préparés en utilisant des quantités molaires identiques de chacune des fonctions réactives, à savoir, l'époxyde, l'imidazole, et les doubles liaisons du 1, 1, 1-tris-(hydroxyméthyle)-propane-tri-acrylate pour l'échantillon 5.
Comme dans l'exemple 6, ces échantillons sont utilisés pour recouvrir un carreau de faïence. On mesure à partir du film obtenu le taux de gonflement selon le protocole décrit dans l'exemple 6.
Les résultats sont donnés dans le Tableau II.

Tableau II

| Echantillon | Taux de gonflement dans la MEC (%) Séchage 21 jours à 23°C, 55% d'humidité relative |
|---|---|
| 3 comparatif | 1320 |
| 4 invention | 865 |
| 5 invention | 613 |

On constate que l'échantillon 3 dans lequel est mis en oeuvre un copolymère (I) ne se présentant pas sous forme d'une dispersion aqueuse conduit à une mauvaise réticulation, contrairement aux échantillons 4 et 5 selon l'invention.

## Exemple 8 - Propriétés des vernis

On prépare une composition de revêtement par mélange de :

- 40, 17 g de latex (II) préparé selon l'exemple 3 présentant un extrait sec de 38,8 %,
- 25,06 g de copolymère (I) préparé selon l'exemple 1 présentant un extrait sec de 43,7 %,
- 0,14 g d'antimousse Bévaloïd® 6681 ,
- 5,32 g d'une solution d'épaississant Rhéo® 2000 à 5 % d'extrait sec neutralisée à pH = 6,9 avec de la soude (NaOH) à 10 %.

La composition de revêtement est déposée sur des plaques d'acier QD36I sur une épaisseur sèche de 35 μm. Les films sont séchés 21 jours à 23°C sous 55 % d'humidité relative.
Les propriétés de dureté et de résistance aux solvants du vernis sont mesurées.
La résistance aux solvants est évaluée selon le protocole suivant : on frotte la plaque avec un tampon de coton imbibé de méthyléthylcétone (MEC) ; on compte le nombre d'aller-retour du tampon nécessaires pour enlever totalement le vernis en un point de la plaque au moins (test de frottement ou rub test).
Les résultats sont rassemblés dans le Tableau III.

Tableau III

| TMFF (température minimum de formation de film) | 15°C |
|---|---|
| Test de frottement (rub test) | >200 aller-retour |

On évalue également la résistance chimique du revêtement obtenu à partir de la composition selon l'invention. La résistance chimique est évaluée selon le test qui consiste à déposer 2 ml de produit à tester sur le revêtement puis à poser dessus un verre de montre pour éviter l'évaporation du liquide. Le liquide est laissé en contact avec le revêtement pendant 1 ou 2 heures selon le produit testé. Après 2 heures, on enlève le liquide et on note l'aspect visuel du film :

- 0 = nul
- 5 = bon (aucune marque laissée sur le vernis par le liquide).

Les résultats sont rassemblés dans le Tableau IV.

Tableau IV

| Produit testé | Temps de contact | Aspect du film |
|---|---|---|
| $H_2SO_4$ à 10 % | 1 heure | 5 |
| $NH_4OH$ à 20 % | 1 heure | 5 |
| eau | 2 heures | 5 |

### Exemple 9 - Temps de vie en pot (pot life) - Test de frottement

La composition de revêtement de l'exemple 8 est déposée sur des plaques d'acier QD 36 I à différents temps $t$, après la fabrication de ladite composition. L'épaisseur sèche des revêtements est de 35 μm.
La résistance aux solvants des revêtements obtenus est évaluée selon le protocole décrit à l'exemple 8 après 21 jours de séchage des revêtements.
Le Tableau V rassemble les résultats obtenus.

Tableau V

| Temps entre la préparation de la composition et son application | $t$ = 30 min. | $t$ = 4 h | $t$ = 6 h | $t$ = 8 h | $t$ = 24 h |
|---|---|---|---|---|---|
| **Test de frottement** | > 200 | > 200 | > 200 | > 200 | > 180 |

On constate que le mélange de dispersion aqueuse de copolymère (I) et de latex (II) préserve ses propriétés longtemps (t > 8 heures), pratiquement jusqu'à 24 heures.
Le temps de vie en pot est amélioré.

### Revendications

1. Dispersion aqueuse de polymère (I) insoluble dans l'eau issu de la polymérisation en émulsion dans l'eau d'un mélange de monomères comprenant :

   - au moins un monomère (A) hétérocyclique insaturé :

     . comportant au moins un hétéroatome nucléophile,
     . présentant au moins une insaturation éthylénique exocyclique,
     . dont l'hétérocycle comprend une insaturation éthylénique,

   - et éventuellement au moins un monomère (B) éthyléniquement insaturé et présentant une fonction choisie parmi les amides (méth)acryliques, les acides ou les sels d'acides carboxyliques, les esters carboxyliques, les acides ou les sels d'acides organosulfuriques, les acides ou les sels d'acides sulfoniques, les acides ou les sels d'acides phosphoniques, les esters vinyliques, ainsi que les monomères aromatiques présentant au moins une insaturation éthylénique exocyclique.

2. Dispersion aqueuse de polymère (I) selon la revendication 1, **caractérisée en ce que** le monomère hétérocyclique insaturé (A) comporte au moins un hétéroatome nucléophile choisi parmi l'azote, le phosphore, l'arsenic, l'antimoine, le bismuth.

3. Dispersion aqueuse de polymère (I) selon la revendication 2, **caractérisée en ce que** le monomère hétérocyclique insaturé (A) comporte deux atomes d'azote.

**4.** Dispersion aqueuse de polymère (I) selon l'une quelconque des revendications 1 à 3, **caractérisée en ce que** l'un au moins des hétéroatomes nucléophiles et/ou l'un au moins des atomes de carbone de l'hétérocycle est substitué par une chaîne carbonée comprenant au moins deux atomes de carbone et au moins une insaturation éthylénique.

**5.** Dispersion aqueuse de polymère (I) selon la revendication précédente, **caractérisée en ce que** la chaîne carbonée est choisie parmi le vinyle, l'allyle, le propényle, le butényle, le butadiényle, les chaînes carbonées fonctionnalisées notamment l'acrylate et le méthacrylate.

**6.** Dispersion aqueuse de polymère (I) selon l'une quelconque des revendications précédentes, **caractérisée en ce que** le monomère (A) appartient à la famille des imidazoles, des imidazolines, des amidines ou des guanidines.

**7.** Dispersion aqueuse de polymère (I) selon la revendication précédente, **caractérisée en ce que** le monomère (A) est le N-vinylimidazole.

**8.** Dispersion aqueuse de polymère (I) selon l'une quelconque des revendications précédentes, **caractérisée en ce que** la teneur en monomère(s) (A) est comprise entre 1 % et 100 % en poids, de préférence entre 1 % et 20 % en poids, et plus particulièrement entre 1 % et 6 % en poids par rapport au poids total du polymère (I).

**9.** Dispersion aqueuse de polymère (I) selon l'une quelconque des revendications précédentes, **caractérisée en ce que** le polymère (I) est un homopolymère issu de l'homopolymérisation d'un mélange composé exclusivement de monomères (A), les monomères (A) étant identiques.

**10.** Dispersion aqueuse de polymère (I) selon l'une quelconque des revendications 1 à 8, **caractérisée en ce que** le monomère (B) éthyléniquement insaturé est choisi parmi :

- les acides ou les sels d'acides carboxyliques du type (méth)acrylique, les diacides carboxyliques ou leurs demi esters ou leurs sels,
- les esters carboxyliques du type acrylique dont le groupe alkyle comporte de 1 à 20 atomes de carbone,
- les acides ou les sels alcalins ou alcalino-terreux d'acides organosulfuriques,
- les acides ou les sels alcalins ou alcalino-terreux d'acides sulfoniques,
- les acides ou les sels alcalins ou alcalino-terreux d'acides phosphoniques,
- les esters vinyliques dont la partie comportant la fonction ester contient 1 à 7 atomes de carbone,
- les amides (méth)acryliques, et leurs dérivés dont le groupe alkyle comporte de 1 à 10 atomes de carbone, et
- les monomères aromatiques présentant au moins une insaturation éthylénique exocyclique, comportant 8 à 18 atomes de carbone.

**11.** Dispersion aqueuse de polymère (I) selon l'une quelconque des revendications 1 à 8 et 10, **caractérisée en ce qu'**elle est issue de la copolymérisation en émulsion d'un mélange de monomères comprenant :

- à titre de monomère (A) le N-vinylimidazole, et
- à titre de monomère (B) le méthacrylate de méthyle et/ou l'acrylate de butyle.

**12.** Dispersion aqueuse de polymère (I) selon l'une quelconque des revendications 1 à 8 et 10 ou 11, **caractérisée en ce que** la teneur en monomère(s) (B) est comprise entre 1 % et 99 % en poids, de préférence entre 80 % et 99 % en poids, et plus particulièrement entre 94 % et 99 % en poids par rapport au poids total du polymère (I).

**13.** Dispersion aqueuse de polymère (I) selon l'une quelconque des revendications 1 à 8 et 10 à 12, **caractérisée en ce que** le copolymère (I) est issu de la copolymérisation d'un mélange de monomères (A), (B) et d'au moins un hydroxy ester carboxylique (C) choisi parmi les esters acryliques et méthacryliques dont le groupe hydroxyalkyl comporte de 2 à 10 atomes de carbone.

**14.** Dispersion aqueuse de polymère (I) selon la revendication 13, **caractérisée en ce que** la teneur en monomère hydroxy ester carboxylique (C) est comprise entre 1 % et 40 % en poids, et de préférence entre 1 % 30 % en poids par rapport au poids total du copolymère (I).

**15.** Dispersion aqueuse de polymère (I) selon l'une quelconque des revendications précédentes, **caractérisée** la polymérisation est réalisée à un pH d'au moins 7.

**16.** Procédé de réticulation d'un latex (II) préparé à partir d'un mélange :

- d'au moins un monomère à insaturation éthylénique (D), et
- soit d'au moins un monomère éthyléniquement insaturé à fonction époxyde (E), soit d'au moins un polymère à fonction époxyde (EP), soit d'un mélange de monomères (E) et de polymères (EP),

**caractérisé en ce que** l'on fait réagir ledit latex (II) avec une dispersion aqueuse de polymère (I) telle que définie à l'une quelconque des revendications 1 à 14.

**17.** Procédé selon la revendication 16, **caractérisé en ce que** les monomères à insaturation éthylénique (D) sont choisis parmi :

- les monomères aromatiques présentant au moins une insaturation éthylénique exocyclique, choisis parmi le styrène, l'α-méthylestyrène, les alkyles styrènes tels que le méthyle styrène, les halogénostyrènes tel que le chlorostyrène, le vinyle toluène, le vinyle naphtalène, le divinyle benzène, le diallyle phtalate, ou
- les monomères à fonction ester carboxylique, tels que les esters acryliques et méthacryliques avec le groupe alkyle en $C_1$ à $C_{18}$, les β-cétoesters carboxyliques copolymérisables éventuellement substitués, les esters vinyliques tels que l'acétate de vinyle, le versatate de vinyle, le propionate de vinyle.

**18.** Procédé de réticulation selon la revendication 16 ou 17, **caractérisé en ce que** les monomères à fonction époxyde (E) sont choisis parmi l'acrylate de glycidyle, le méthacrylate de glycidyle et l'oxyde d'allyle et de glycidyle.

**19.** Procédé de réticulation selon l'une quelconque des revendications 16 à 18, **caractérisé en ce que** les polymères à fonction époxyde (EP) sont choisis parmi le bisphénol A diglycidyle éther, diglycidyle adipate, 1,4-diglycidyle butyle éther et leurs dérivés.

**20.** Procédé de réticulation selon l'une quelconque des revendications 16 à 19, **caractérisé en ce que** le latex (II) est préparé à partir d'au moins un monomère éthyléniquement insaturé à fonction époxyde (E) et d'un mélange de monomères à insaturation éthylénique (D) comprenant au moins un monomère aromatique à insaturation éthylénique exocyclique et au moins un ester (méth)acrylique.

**21.** Procédé de réticulation selon l'une quelconque des revendications 16 à 20, **caractérisé en ce que** le latex (II) est préparé à partir d'au moins un monomère éthyléniquement insaturé à fonction époxyde (E) et d'un mélange de monomères à insaturation éthylénique (D) comprenant au moins monomère aromatique à insaturation éthylénique exocyclique et au moins un β-cétoester carboxylique.

**22.** Procédé de réticulation selon l'une quelconque des revendications 16 à 21, **caractérisé en ce que** le latex (II) est préparé à partir d'un mélange comprenant, en outre, au moins un monomère éthyléniquement insaturé à fonction hydroxyle (F).

**23.** Procédé de réticulation selon la revendication 22, **caractérisé en ce que** le monomère à fonction hydroxyle (F) est choisi parmi le 2-hydroxyéthyle acrylate, le 2-hydroxyéthyle méthacrylate, le 2-hydroxypropyle acrylate, le 2-hydroxypropyle méthacrylate, le 3-hydroxypropyle acrylate, le 3-hydroxypropyle méthacrylate, le 4-hydroxybutyle acrylate, le 4-hydroxybutyle méthacrylate.

**24.** Procédé de réticulation selon la revendication 19, **caractérisé en ce que** l'on fait réagir le latex (II) avec une dispersion de polymère (I) issu de l'homopolymérisation d'un mélange constitué exclusivement de monomères (A).

**25.** Procédé de réticulation selon l'une quelconque des revendications 16 à 23, **caractérisé en ce que** la dispersion aqueuse de polymère (I) est issue de la copolymérisation d'un mélange de monomères comprenant :

- à titre de monomère (A) le N-vinylimidazole, et
- à titre de monomère (B) le méthacrylate de méthyle et/ou l'acrylate de n-butyle.

**26.** Procédé de réticulation selon l'une quelconque des revendications 16 à 25, **caractérisé en ce que** la réticulation du latex a lieu en présence d'un composé (G) susceptible de pouvoir réagir selon la réaction de Michael.

**27.** Procédé de réticulation selon la revendication précédente, **caractérisé en ce que** le composé (G) est choisi parmi les résines comportant au moins deux double liaisons conjuguées avec au moins une fonction carbonyle (C=O), notamment le 1, 1, 1-tris(hydroxyméthyle)-propane-tri-acrylate.

28. Procédé de réticulation selon l'une quelconque des revendication 16 à 27, **caractérisé en ce que** la dispersion aqueuse de polymère (I) et le latex (II) réticulent à température ambiante pour former des films et des revêtements.

29. Produit contenant une dispersion aqueuse de polymère (I) telle que définie dans l'une quelconque des revendications 1 à 15, et un latex (II) préparé à partir d'un mélange d'au moins un monomère à insaturation éthylénique (D), d'au moins un monomère éthyléniquement insaturé à fonction époxyde (E), et éventuellement d'au moins un polymère à fonction époxyde (EP), en tant que produit de combinaison pour une utilisation conjointe pour la préparation d'un revêtement.

**Patentansprüche**

1. Wäßrige Dispersion eines wasserunlöslichen Polymers (I), das aus der Emulsionspolymerisation in Wasser einer Mischung von Monomeren stammt, die umfaßt:

   - mindestens ein ungesättigtes heterocyclisches Monomer (A),

     · das mindestens ein nucleophiles Heteroatom aufweist,

     · das mindestens eine exocyclische ethylenisch ungesättigte Bindung aufweist,

     · dessen Heterozyklus eine ethylenisch ungesättigte Bindung umfaßt,

   - und gegebenenfalls mindestens ein ethylenisch ungesättigtes Monomer (B) mit einer Funktion, die ausgewählt ist aus (Meth-)Acrylamiden, Carbonsäuren oder Carbonsäuresalzen, Carbonsäureestern, Organosulfonsäuren und Organosulfonsäuresalzen, Sulfonsäuren und Sulfonsäuresalzen, Phosphonsäuren und Phosphonsäuresalzen, Vinylestern sowie aromatischen Monomeren mit mindestens einer exocyclischen ethylenisch ungesättigten Bindung.

2. Wäßrige Dispersion eines Polymers (I) nach Anspruch 1, **dadurch gekennzeichnet, daß** das ungesättigte heterocyclische Monomer (A) mindestens ein nucleophiles Heteroatom umfaßt, das ausgewählt ist aus Stickstoff, Phosphor, Arsen, Antimon und Wismuth.

3. Wäßrige Dispersion eines Polymers (I) nach Anspruch 2, **dadurch gekennzeichnet, daß** das ungesättigte heterocyclische Monomer (A) zwei Stickstoffatome aufweist.

4. Wäßrige Dispersion eines Polymers (I) nach einem der Ansprüche 1 bis 3, **dadurch gekennzeichnet, daß** mindestens eines der nucleophilen Heteroatome und/oder mindestens eines der Kohlenstoffatome des Heterozyklus substituiert ist mit einer Kohlenstoffkette, die mindestens zwei Kohlenstoffatome und mindestens eine ethylenisch ungesättigte Bindung aufweist.

5. Wäßrige Dispersion eines Polymers (I) nach dem vorhergehenden Anspruch, **dadurch gekennzeichnet, daß** die Kohlenstoffkette ausgewählt ist aus Vinyl, Allyl, Propenyl, Butenyl und Butadienyl, wobei die Kohlenstoffketten insbesondere mit Acrylat oder Methacrylat funktionalisiert sind.

6. Wäßrige Dispersion eines Polymers (I) nach einem der vorhergehenden Ansprüche, **dadurch gekennzeichnet, daß** das Monomer (A) zur Familie der Imidazole, Imidazoline, Amidine oder Guanidine gehört.

7. Wäßrige Dispersion eines Polymers (I) nach dem vorhergehenden Anspruch, **dadurch gekennzeichnet, daß** das Monomer (A) N-Vinylimidazol ist.

8. Wäßrige Dispersion eines Polymers (I) nach einem der vorhergehenden Ansprüche, **dadurch gekennzeichnet, daß** der Gehalt an Monomer(en) (A) zwischen 1 Gew.-% und 100 Gew.-%, vorzugsweise zwischen 1 Gew.-% und 20 Gew.-%, insbesondere zwischen 1 Gew.-% und 6 Gew.-%, bezogen auf das Gesamtgewicht des Polymers (I), liegt.

9. Wäßrige Dispersion eines Polymers (I) nach einem der vorhergehenden Ansprüche, **dadurch gekennzeichnet, daß** das Polymer (I) ein Homopolymer ist, das aus der Homopolymerisation einer Mischung hervorgeht, die ausschließlich aus Monomeren (A) zusammengesetzt ist, wobei die Monomere (A) identisch sind.

10. Wäßrige Dispersion eines Polymers (I) nach einem der Ansprüche 1 bis 8, **dadurch gekennzeichnet, daß** das ethylenisch ungesättigte Monomer (B) ausgewählt ist aus:

   - Carbonsäuren oder Carbonsäuresalzen vom (Meth-)Acryltyp, Carbondisäuren oder deren Halbestern oder deren Salzen,

   - Carbonsäuren vom Acryltyp, deren Alkylgruppe 1 bis 20 Kohlenstoffatome umfaßt,

   - Organosulfonsäuren oder Alkali- oder Erdalkalisalzen von Organosulfonsäuren,

   - Sulfonsäuren oder Alkali- oder Erdalkalisalzen von Sulfonsäuren,

   - Phosphonsäuren oder Alkali- oder Erdalkalisalzen von Phosphonsäuren,

   - Vinylestern, deren Teil, der die Esterfunktion umfaßt, 1 bis 7 Kohlenstoffatome enthält,

   - (Meth-)Acrylamiden und deren Derivaten, deren Alkylgruppe 1 bis 10 Kohlenstoffatome umfaßt, und

   - aromatischen Monomeren mit mindestens einer exocyclischen ethylenisch ungesättigten Bindung, die 8 bis 18 Kohlenstoffatome umfassen.

11. Wäßrige Dispersion eines Polymers (I) nach einem der Ansprüche 1 bis 8 und 10, **dadurch gekennzeichnet, daß** sie aus der Emulsionscopolymerisation einer Mischung von Monomeren stammt, die umfaßt:

   - als Monomer (A) N-Vinylimidazol und

   - als Monomer (B) Methylmethacrylat und/oder Butylacrylat.

12. Wäßrige Dispersion eines Polymers (I) nach einem der Ansprüche 1 bis 8 und 10 oder 11, **dadurch gekennzeichnet, daß** der Gehalt an Monomer(en) (B) zwischen 1 Gew.-% und 99 Gew.-%, vorzugsweise zwischen 80 Gew.-% und 99 Gew.-%, insbesondere zwischen 94 Gew.-% und 99 Gew.-%, bezogen auf das Gesamtgewicht des Polymers (I), liegt

13. Wäßrige Dispersion eines Polymers (I) nach einem der Ansprüche 1 bis 8 und 10 bis 12, **dadurch gekennzeichnet, daß** das Copolymer (I) aus der Copolymerisation einer Mischung von Monomeren (A), (B) und mindestens eines Carbonsäurehydroxyesters (C) stammt, der ausgewählt ist aus Acrylund Methacrylestern, deren Hydroxyalkylgruppe 2 bis 10 Kohlenstoffatome umfaßt.

14. Wäßrige Dispersion eines Polymers (I) nach Anspruch 13, **dadurch gekennzeichnet, daß** der Gehalt an Carbonsäurehydroxyestermonomer (C) zwischen 1 Gew.-% und 40 Gew.-%, vorzugsweise zwischen 1 Gew.-% und 30 Gew.-%, bezogen auf das Gesamtgewicht des Copolymers (I), liegt.

15. Wäßrige Dispersion eines Polymers (I) nach einem der vorhergehenden Ansprüche, **dadurch gekennzeichnet, daß** die Polymerisation bei einem pH-Wert von mindestens 7 durchgeführt ist.

16. Verfahren zur Vernetzung eines Latex (II), hergestellt ausgehend von einer Mischung:

   - mindestens eines Monomers mit einer ethylenisch ungesättigten Bindung (D) und

   - entweder mindestens eines ethylenisch ungesättigten Monomers mit einer Epoxidfunktion (E) oder mindestens eines Polymers mit einer Epoxidfunktion (EP) oder einer Mischung von Monomeren (E) und Polymeren (EP),

   **dadurch gekennzeichnet, daß** man den Latex (II) mit einer wäßrigen Dispersion eines Polymers (I), wie in den Ansprüchen 1 bis 14 definiert, reagieren läßt.

17. Verfahren nach Anspruch 16, **dadurch gekennzeichnet, daß** die Monomeren mit ethylenisch ungesättigter Bindung (D) ausgewählt sind aus:

- aromatischen Monomeren mit mindestens einer exocyclischen ethylenischen ungesättigten Bindung, ausgewählt aus Styrol, $\alpha$-Methylstyrol, Alkylstyrolen wie Methylstyrol, Halogenstyrolen wie Chlorstyrol, Vinyltoluol, Vinylnaphthalin, Divinylbenzol und Diallylphthalat, oder

- Monomeren mit Carbonsäureesterfunktion, wie Acryl- und Methacrylestern mit einer $C_1$-$C_{18}$-Alkylgruppe, gegebenenfalls substituierten copolymerisierbaren $\beta$-Carbonsäureketoestern, Vinylestern wie Vinylacetat, Vinylversatat und Vinylpropionat.

18. Verfahren zur Vernetzung nach Anspruch 16 oder 17, **dadurch gekennzeichnet, daß** die Monomeren mit Epoxidfunktion (E) ausgewählt sind aus Glycidylacrylat, Glycidylmethacrylat und Allyl- und Glycidyloxid.

19. Verfahren zur Vernetzung nach einem der Ansprüche 16 bis 18, **dadurch gekennzeichnet, daß** die Polymere mit Epoxidfunktion (EP) ausgewählt sind aus Bisphenol-A-diglycidylether, Diglycidyladipat, 1,4-Diglycidylbutylether und deren Derivaten.

20. Verfahren zur Vernetzung nach einem der Ansprüche 16 bis 19, **dadurch gekennzeichnet, daß** der Latex (II) hergestellt wird ausgehend von mindestens einem ethylenisch ungesättigten Monomer mit Epoxidfunktion (E) und einer Mischung von Monomeren mit ethylenisch ungesättigter Bindung (D), die mindestens ein aromatisches Monomer mit exocyclischer ethylenisch ungesättigter Bindung und mindestens einen (Meth-)Acrylester umfaßt.

21. Verfahren zur Vernetzung nach einem der Ansprüche 16 bis 20, **dadurch gekennzeichnet, daß** der Latex (II) hergestellt wird ausgehend von mindestens einem ethylenisch ungesättigten Monomer mit Epoxidfunktion (E) und einer Mischung ethylenisch ungesättigter Monomere (D), die mindestens ein aromatisches Monomer mit exocyclischer ethylenisch ungesättigter Bindung und mindestens einen $\beta$-Carbonsäureketoester umfaßt.

22. Verfahren zur Vernetzung nach einem der Ansprüche 16 bis 21, **dadurch gekennzeichnet, daß** der Latex (II) hergestellt wird ausgehend von einer Mischung, die außerdem mindestens ein ethylenisch ungesättigtes Monomer mit Hydroxylfunktion (F) umfaßt.

23. Verfahren zur Vernetzung nach Anspruch 22, **dadurch gekennzeichnet, daß** das Monomer mit Hydroxylfunktion (F) ausgewählt ist aus 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 4-Hydroxybutylacrylat und 4-Hydroxybutylmethacrylat.

24. Verfahren zur Vernetzung nach Anspruch 19, **dadurch gekennzeichnet, daß** man den Latex (II) mit einer Dispersion eines Polymers (I) reagieren läßt, die aus der Homopolymerisation einer Mischung stammt, die ausschließlich aus Monomeren (A) besteht.

25. Verfahren zur Vernetzung nach einem der Ansprüche 16 bis 23, **dadurch gekennzeichnet, daß** die wäßrige Dispersion des Polymers (I) aus der Copolymerisation einer Mischung von Monomeren stammt, die umfaßt:

- als Monomer (A) N-Vinylimidazol und

- als Monomer (B) Methylmethacrylat und/oder n-Butylacrylat.

26. Verfahren zur Vernetzung nach einem der Ansprüche 16 bis 25, **dadurch gekennzeichnet, daß** die Vernetzung des Latex in Gegenwart einer Verbindung (G) stattfindet, die gemäß einer Michael-Reaktion reagieren kann.

27. Verfahren zur Vernetzung nach dem vorhergehenden Anspruch, **dadurch gekennzeichnet, daß** die Verbindung (G) ausgewählt ist aus Harzen, die mindestens zwei konjugierte Doppelbindungen mit mindestens einer Carbonylfunktion (C=O), insbesondere 1,1,1-Tris-(Hydroxymethyl)-propantriacrylat, umfassen.

28. Verfahren zur Vernetzung nach einem der Ansprüche 16 bis 27, **dadurch gekennzeichnet, daß** die wäßrige Dispersion des Polymers (I) und des Latex (II) bei Umgebungstemperatur vernetzen, um Filme oder Beschichtungen zu bilden.

29. Produkt, enthaltend eine wäßrige Dispersion eines Polymers (I), wie in einem der Ansprüche 1 bis 15 definiert, und einen Latex (II), hergestellt ausgehend von einer Mischung von mindestens einem ethylenisch ungesättigten Monomer (D), mindestens einem ethylenisch ungesättigten Monomer mit Epoxidfunktion (E) und gegebenenfalls mindestens einem Polymer mit Epoxidfunktion (EP), als Kombinationsprodukt für eine gemeinsame Verwendung zur Herstellung einer Beschichtung.

**Claims**

1. An aqueous dispersion of a water-insoluble polymer (I) derived from emulsion polymerization in water of a mixture of monomers comprising:

   • at least one unsaturated heterocyclic monomer (A):

     o containing at least one nucleophilic heteroatom;
     o with at least one exocyclic ethylenically unsaturated bond;
     o wherein the heterocycle comprises an ethylenically unsaturated bond;

   • and optionally, at least one ethylenically unsaturated monomer (B) having a function selected from (meth) acrylic amides, carboxylic acids or carboxylic acid salts, carboxylic esters, organosulphuric acids or organosulphuric acid salts, sulphonic acids or sulphonic acid salts, phosphonic acids or phosphonic acid salts, and vinyl esters, as well as aromatic monomers containing at least one exocyclic ethylenically unsaturated bond.

2. An aqueous dispersion of a polymer (I) according to claim 1, **characterized in that** the unsaturated heterocyclic monomer (A) comprises at least one nucleophilic heteroatom selected from nitrogen, phosphorus, arsenic, antimony and bismuth.

3. An aqueous dispersion of a polymer (I) according to claim 2, **characterized in that** the unsaturated heterocyclic monomer (A) contains two nitrogen atoms.

4. An aqueous dispersion of a polymer (I) according to any one of claims 1 to 3, **characterized in that** at least one of the nucleophilic heteroatoms and/or at least one of the carbon atoms of the heterocycle is substituted by a carbon-containing chain containing at least two carbon atoms and at least one ethylenically unsaturated bond.

5. An aqueous dispersion of a polymer (I) according to the preceding claim, **characterized in that** the carbon-containing chain is selected from vinyl, allyl, propenyl, butenyl, butadienyl and functionalized carbon-containing chains, in particular acrylate and methacrylate.

6. An aqueous dispersion of a polymer (I) according to any one of the preceding claims, **characterized in that** monomer (A) belongs to the imidazole, imidazoline, amidine or guanidine family.

7. An aqueous dispersion of a polymer (I) according to the preceding claims, **characterized in that** the monomer (A) is N-vinylimidazole.

8. An aqueous dispersion of a polymer (I) according to any one of the preceding claims, **characterized in that** the quantity of monomer(s) (A) is in the range 1% to 100% by weight, preferably in the range 1% to 20% by weight, and more particularly in the range 1% to 6% by weight with respect to the total weight of polymer (I).

9. An aqueous dispersion of a polymer (I) according to any one of the preceding claims, **characterized in that** polymer (I) is a homopolymer derived from homopolymerization of a mixture composed exclusively of monomers (A), monomers (A) being identical.

10. An aqueous dispersion of a polymer (I) according to any one of claims 1 to 8, **characterized in that** ethylenically unsaturated monomer (B) is selected from:

- carboxylic acids or carboxylic acid salts of the (meth)acrylic type, dibasic carboxylic acids or their demi-esters or their salts;
- acrylic type carboxylic esters the alkyl group of which contains 1 to 20 carbon atoms;
- organosulphuric acids or their alkali or alkaline-earth salts;
- sulphonic acids or their alkali or alkaline-earth salts;
- phosphonic acids or their alkali or alkaline-earth salts;
- vinyl esters in which the portion comprising the ester function contains 1 to 7 carbon atoms;
- (meth)acrylic amides and their derivatives the alkyl group of which contains 1 to 10 carbon atoms; and
- aromatic monomers having at least one exocyclic ethylenically unsaturated bond, containing 8 to 18 carbon atoms.

11. An aqueous dispersion of a polymer (I) according to any one of claims 1 to 8 and 10, **characterized in that** it derives from emulsion copolymerization of a mixture of monomers comprising:

   - N-vinylimidazole as monomer (A); and
   - methyl methacrylate and/or butyl acrylate as monomer (B).

12. An aqueous dispersion of a polymer (I) according to any one of claims 1 to 8 and 10 or 11, **characterized in that** the quantity of monomer(s) (B) is in the range 1% to 99% by weight, preferably in the range 80% to 99% by weight, and more particularly in the range 94% to 99% by weight with respect to the total weight of polymer (I).

13. An aqueous dispersion of a polymer (I) according to any one of claims 1 to 8 and 10 to 12, **characterized in that** copolymer (I) derives from copolymerizing a mixture of monomers (A), (B) and at least one carboxylic hydroxyl ester (C) selected from acrylic and methacrylic esters the hydroxyalkyl group of which contains 2 to 10 carbon atoms.

14. An aqueous dispersion of a polymer (I) according to claim 13, **characterized in that** the quantity of carboxylic hydroxy ester monomer (C) is in the range 1% to 40% by weight, preferably in the range 1% to 30% by weight with respect to the total weight of copolymer (I).

15. An aqueous dispersion of a polymer (I) according to any one of the preceding claims, **characterized in that** polymerization is carried out at a pH of at least 7.

16. A process for cross-linking a latex (II) prepared from a mixture of:

   - at least one ethylenically unsaturated monomer (D); and
   - either at least one ethylenically unsaturated monomer with an epoxy function (E), or at least one polymer with an epoxy function (EP) or a mixture of monomers (E) and polymers (EP);

   **characterized in that** said latex (II) is reacted with an aqueous dispersion of a polymer (I) as defined in any one of claims 1 to 14.

17. A process according to claim 16, **characterized in that** the ethylenically unsaturated monomers (D) are selected from:

   - aromatic monomers having at least one exocyclic ethylenically unsaturated bond, selected from styrene, $\alpha$-methylstyrene, alkylstyrenes such as methylstyrene, halogenostyrenes such as chlorostyrene, vinyltoluene, vinylnaphthalene, divinylbenzene, diallylphthalate; or
   - monomers containing a carboxyl function, such as acrylic or methacrylic esters containing a $C_1$ to $C_{18}$ alkyl group, copolymerizable carboxylic $\beta$-ketoesters that may optionally be substituted, and vinyl esters such as vinyl acetate, vinyl versatate or vinyl propionate.

18. A crosslinking process according to claim 16 or claim 17, **characterized in that** the monomers containing an epoxy function (E) are selected from glycidyl acrylate, glycidyl methacrylate, allyl oxide and glycidyl oxide.

19. A crosslinking process according to any one of claims 16 to 18, **characterized in that** the polymers containing an epoxy function (EP) are selected from bisphenol A diglycidyl ether, diglycidyl adipate, 1,4-diglycidyl butyl ether and their derivatives.

**20.** A crosslinking process according to any one of claims 16 to 19, **characterized in that** latex (II) is prepared from at least one ethylenically unsaturated monomer with an epoxy function (E) and a mixture of monomers containing an ethylenically unsaturated bond (D) comprising at least one aromatic monomer with an exocyclic ethylenically unsaturated bond and at least one (meth)acrylic ester.

**21.** A crosslinking process according to any one of claims 16 to 20, **characterized in that** said latex (II) is prepared from at least one ethylenically unsaturated monomer with an epoxy function (E) and a mixture of ethylenically unsaturated monomers (d) comprising at least one aromatic monomer with an exocyclic ethylenically unsaturated bond and at least one carboxylic β-ketoester.

**22.** A crosslinking process according to any one of claims 16 to 21, **characterized in that** latex (II) is prepared from a mixture comprising, in addition, at least one ethylenically unsaturated monomer with a hydroxyl function (F).

**23.** A crosslinking process according to claim 22, **characterized in that** the monomer with a hydroxyl function (F) is selected from 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate and 4-hydroxybutyl methacrylate.

**24.** A crosslinking process according to claim 19, **characterized in that** latex (II) is reacted with a dispersion of a polymer (I) derived from homopolymerizing a mixture exclusively constituted by monomers (A).

**25.** A crosslinking process according to any one of claims 16 to 23, **characterized in that** the aqueous dispersion of polymer (I) is derived from copolymerizing a mixture of monomers comprising:

- N-vinylimidazole as monomer (A); and
- methyl methacrylate and/or n-butyl acrylate as monomer (B).

**26.** A crosslinking process according to any one of claims 16 to 25, **characterized in that** the latex is crosslinked in the presence of a compound (G) that is capable of undergoing the Michael reaction.

**27.** A crosslinking process according to the preceding claim, **characterized in that** compound (G) is selected from resins comprising at least two double bonds conjugated with at least one carbonyl function (C=O), in particular 1,1,1-tris(hydroxymethyl)-propane-tri-acrylate.

**28.** A crosslinking process according to any one of claims 16 to 27, **characterized in that** the aqueous dispersion of polymer (I) and latex (II) crosslink at ambient temperature to form films and coatings.

**29.** A product containing an aqueous dispersion of a polymer (I) as defined in any one of claims 1 to 15, and a latex (II) prepared from a mixture of at least one ethylenically unsaturated monomer (D), at least one ethylenically unsaturated monomer with an epoxy function (E), and optionally at least one polymer with an epoxy function (EP), as a combination product for joint use in preparing a coating.